# EUROPÄISCHE PATENTSCHRIFT

(11) **EP 2 880 329 B1**
(45) Veröffentlichungstag und Bekanntmachung des Hinweises auf die Patenterteilung: **19.04.2017**
(21) Anmeldenummer: 13753556.3
(22) Anmeldetag: 23.07.2013
(51) Int. Cl.: F16D 25/08, F16J 15/16

(54) **NEHMERZYLINDER FÜR EINE HYDRAULISCHE AUSRÜCKANORDNUNG ZUR BETÄTIGUNG EINER KUPPLUNG**
SLAVE CYLINDER FOR A HYDRAULIC DISENGAGEMENT ARRANGEMENT FOR OPERATING A CLUTCH
CYLINDRE RÉCEPTEUR POUR UN DISPOSITIF DE DÉBRAYAGE HYDRAULIQUE EN VUE D'ACTIONNER UN EMBRAYAGE

(30) Priorität: 02.08.2012 DE 102012213656
(43) Veröffentlichungstag der Anmeldung: 10.06.2015
(73) Patentinhaber: Schaeffler Technologies AG & Co. KG, 91074 Herzogenaurach (DE)
(72) Erfinder: BOSNJAK, Daniel, F-67470 Seltz (FR)
(86) Internationale Anmeldenummer: PCT/DE2013/200071
(87) Internationale Veröffentlichungsnummer: WO 2014/019580

(56) Entgegenhaltungen:
- WO-A1-00/06921
- DE-A1- 19 949 205
- FR-A1- 2 772 443

## Beschreibung

Die vorliegende Erfindung betrifft einen Nehmerzylinder für eine hydraulische Ausrückanordnung zur Betätigung einer Kupplung. Dabei ist das hydraulische Ausrücksystem der Kupplung, bei der es sich insbesondere um eine Doppelkupplung handelt, deckelfest und konzentrisch angeordnet.

Aus der EP 01970589 B1 geht ein Nehmerzylinder für ein hydraulisches Ausrücksystem einer Reibungskupplung von Kraftfahrzeugen hervor, wobei der Nehmerzylinder ein konzentrisch zu einer Getriebeeingangswelle angeordnetes Gehäuse aufweist. Eine Führungshülse ist von der zylindrischen Innenfläche des Gehäuses radial beabstandet. Zwischen der genannten Innenfläche und der zylindrischen Außenfläche der Führungshülse besteht ein kreisringförmiger Druckraum, in dem ein Ringkolben axial verschiebbar angeordnet ist. Der Ringkolben ist mit einer Ringdichtung versehen, deren Dichtlippen radial gespreizt angeordnet sind. Der Ring-kolben weist mindestens einen zusätzlichen Dichtungsträger zur Aufnahme der Ringdichtung auf, der bei einer Druckbeaufschlagung des Druckraumes einen Ringspalt zwischen dem Ringkolben und der Innenfläche des Gehäuses und/oder einen Ringspalt zwischen dem Ringkolben und der Außenfläche der Führungshülse verkleinert.

Aus der Druckschrift WO 00/06921 geht ein hydraulisch betätigtes Ausrücksystem für eine Reibungskupplung eines Kraftfahrzeuges hervor, die eine Kolben-Zylindereinheit aufweist, die ein ringförmiges, zylindrisches Gehäuse sowie ein inneres Führungsrohr mit einer dazwischen liegenden ringförmigen Druckkammer umfasst. Dabei ist in der Druckkammer ein axial verschiebbarer Ringkolben angeordnet, der am vorderen Ende eine Ringdichtung mit an der Innenseite des Gehäuses und an der Außenseite des Führungsrohres anliegenden Dichtlippen aufweist. Die Dichtung ist zur Arretierung am Ringkolben formschlüssig mit einem am Ring-kolben befestigten Haltering und einem Endabschnitt des Kolbens verbunden.

Weitere Nehmerzylindern für hydraulische Ausrücksysteme sind aus der DE 19949205 A1 und der FR 2772443 A1 bekannt.

Die Aufgabe der vorliegenden Erfindung besteht darin, einen Nehmerzylinder für eine hydraulische Ausrückanordnung zur Betätigung einer Kupplung so auszugestalten, dass die Volumenaufnahme und die Hysterese des an dem Ringkolben vorgesehenen Dichtungsringes möglichst klein sind.

Diese Aufgabe wird durch einen Nehmerzylinder mit den Merkmalen des Patentanspruches 1 gelöst.

Demgemäß betrifft die vorliegende Erfindung einen Nehmerzylinder für eine Ausrückanordnung zur Betätigung einer Kupplung mit einem zylindrischen Gehäuse und einem konzentrisch dazu angeordneten und radial beabstandeten, zylindrischen Führungsrohr, die zwischen sich eine ringförmige Druckkammer bilden, in der ein Ringkolben axial verschiebbar angeordnet ist. Der Ringkolben weist dabei an seiner der Druckkammer zugewandten Seite einen Dichtungsring auf. Der Dichtungsring umfasst einen axial verlaufenden Dichtungshals bzw. Dichtungsbereich. Ein äußeres Ringteil ist zwischen der Außenseite des Dichtungsbereiches und der zylindrischen Innenfläche des Gehäuses angeordnet. Ferner ist ein inneres Ringteil zwischen der Innenseite des Dichtungsbereiches und der zylindrischen Außenfläche des Führungsrohres vorgesehen. Dies hat den Vorteil, dass sich der Dichtungsbereich bei einer Druckbeaufschlagung des Dichtungsringes über das äußere Ringteil an der Innenfläche des Gehäuses und über das innere Ringteil an der Außenseite des Führungsrohres abstützt. Durch diese Abstützung wird vorteilhafter Weise erreicht, dass bei einer Belastung des Dichtungsringes die Volumenvergrößerung des Dichtungsringes extrem klein ist. Zudem wird dadurch erreicht, dass die Hystereseerscheinungen bei einer solchen und gleichzeitig einer spielfreien Anbindung der Dichtung an den Kolben gewährleistet ist.

Der Dichtungsring weist ein Y-förmiges Profil auf, das einen Dichtungsfuß, den axial daran anschließenden Dichtungsbereich und an diesen anschließend, eine äußere Dichtlippe und eine innere Dichtlippe umfasst. Die Dichtlippen laufen dabei V-förmig auseinander. Die äußere Dichtlippe liegt an der zylindrischen Innenfläche des Gehäuses und die innere Dichtlippe liegt an der zylindrischen Außenfläche des Führungsrohres an. Dadurch wird bei einer Belastung des Dichtungsringes eine besonders dichte Verbindung zwischen den Dichtlippen und dem Gehäuse bzw. dem Führungsrohr sichergestellt.

Der Dichtungsfuß des Dichtungsringes wird formschlüssig und dicht in einer komplementär zu ihm ausgebildeten Ausnehmung des Ringkolbens gehalten, wobei die Ausnehmung zweckmäßigerweise Hinterschneidungen aufweist.

Ferner wird eine besonders gute Abdichtung bei einer Belastung erzielt, wenn sich der genannte Dichtungsbereich ausgehend von dem Dichtungsfuß des Dichtungsringes jeweils bogenförmig nach außen zu der äußeren Dichtlippe bzw. nach innen zu der inneren Dichtlippe vorzugsweise erweitert und wenn sich dementsprechend vorzugsweise auch das äußere Ringteil innenseitig, ausgehend von der Seite des Ringkolbens im Dichtungsbereich des Dichtungsringes bogenförmig nach außen erweitert und sich das innere Ringteil außenseitig, ausgehend von der Seite des Ringkolbens im Dichtungsbereich des Dichtungsringes bogenförmig nach innen erweitert. Auf diese Wse wird der Dichtungsring in dem Dichtungsbereich formschlüssig zwischen dem äußeren Ringteil und dem inneren Ringteil gehalten.

Im Belastungsfall ist es besonders vorteilhaft, wenn sich die einander zugewandten Flächen des äußeren Ringteiles, des inneren Ringteiles und des Ringkolbens jeweils axial aneinander abstützen.

Bei einer bevorzugten Ausführungsform liegen die dem Ringkolben zugewandte Fläche des äußeren Ringteiles radial außerhalb der Ausnehmung an dem Ringkolben und die dem Ringkolben zugewandte Fläche des inneren Ringteiles radial innerhalb der Ausnehmung an dem Ringkolben an.

Vorteilhafter Weise bestehen die Ringteile aus einem nicht verstärkten Kunststoffmaterial.

Im Folgenden werden die Erfindung und deren Ausgestaltungen im Zusammenhang mit den Figuren näher erläutert. Es zeigen:
- Figur 1: einen Teilschnitt durch ein den erfindungsgemäßen Nehmerzylinder aufweisendes hydraulisches Ausrücksystem und
- Figur 2: eine vergrößerte Darstellung des Ringkolbens und des Dichtungsringes.

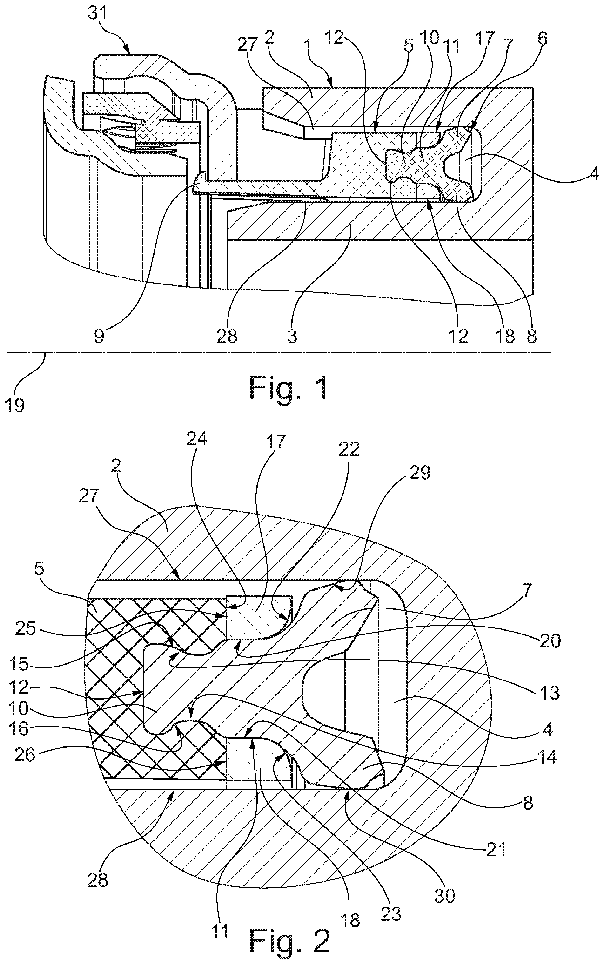

Gemäß Figur 1 umfasst deine hydraulische Ausrückanordnung 31 einen Nehmerzylinder 1 mit einem ringförmigen, zylindrischen Gehäuse 2 und einem inneren zylindrischen Führungsrohr 3. Zwischen dem Gehäuse 2 und dem Führungsrohr 3 ist eine ringförmige Druckkammer 4 ausgebildet, die mit einem nicht näher dargestellten Hydraulikkanal verbunden ist. In der Druckkammer 4 befindet sich ein axial verschiebbarer Ringkolben 5, an dem ein Dichtungsring 6 formschlüssig befestigt ist. Vorzugsweise weist der Dichtungsring 6 ein Y-förmiges Profil auf. Der Dichtungsring 6 besitzt demgemäß eine Dichtlippe 7, die an der zylindrischen Außenfläche des Gehäuses 2 anliegt und eine weitere Dichtlippe 8, die an der zylindrischen Innenfläche des inneren Führungsrohres 3 anliegt. Dabei laufen diese Dichtlippen 7, 8 V-förmig auseinander. Der Ringkolben 5 ist in der Figur 1 in einer Endlage dargestellt, in der er mit einem Vorsprung 9 in an sich bekannter Weise mit der Ausrückanordnung 31 in Verbindung steht. Die Rotationsachse der vorliegenden Ausrückanordnung 31 ist mit 19 bezeichnet.

Der Dichtungsring 6 umfasst ferner einen Dichtungsfuß 10 sowie einen daran anschließenden Dichtungshals bzw. Dichtungsbereich 11 zwischen dem Dichtungsfuß 10 und den Dichtlippen 7, 8, der in axialer Richtung verläuft. Der Dichtungsfuß 10 greift in eine zu ihm komplementär ausgebildete Ausnehmung 12 des Ringkolbens 5 ein, die sich in dem der Druckkammer 4 zugewandten Endbereich des Ringkolbens 5 befindet. Der Dichtungsfuß 10 umfasst eine äußere Ringnut 13 sowie eine innere Ringnut 14, in die korrespondierende Hinterschneidungen 15, 16 der Ausnehmung 12 des Ringkolbens 5 in an sich bekannter Weise eingreifen, um den Dichtungsring 6 mit seinem Dichtungsfuß 10 formschlüssig mit dem Ringkolben 5 zu verbinden. Dieser Sachverhalt ist besonders deutlich aus der Figur 2 ersichtlich.

Erfindungsgemäß sind zur Verstärkung und Abstützung des Dichtungsringes 6 ein äußeres Ringteil 17 und ein inneres Ringteil 18 vorgesehen, die den im Wesentlichen axial verlaufenden Dichtungsbereich 11 des Dichtungsringes 6 außen- bzw. innenseitig umgeben. Das äußere Ringteil 17 und das innere Ringteil 18 sind in der Druckkammer 4 angeordnet und abgestützt und reduzieren die Volumenaufnahme und die Hysterese des Dichtungsringes 6 bei einer Belastung. Der Dichtungsring 6 ist dabei spielfrei angebunden. Der Dichtungsbereich 11 des Dichtungsringes 6 durchgreift den Raum zwischen dem äußeren Ringteil 17 und dem inneren Ringteil 18, wobei sich die diesen Raum bildenden Bereiche der Ringteile 17, 18 jeweils ausgehend von einem axialen Bereich 20, 21 über einen bogenförmigen Bereich 22, 23 erweitern, wie dies die Figur 2 besonders deutlich zeigt. Der genannte Raum bildet einen Form-schluss zwischen dem Dichtungsring 6 und den äußeren Ringteil 17 sowie dem inneren Ring-teil 18. Die Ringteile 17, 18 bestehen vorzugsweise aus einem nicht verstärkten Kunststoff-material.

Das äußere Ringteil 17 liegt axial mit seiner Fläche 24 an der ihm zugewandten Fläche 25 des Ringkolbens 5 radial außerhalb der Ausnehmung 12 an. Das inner Ringteil 17 liegt axial mit seiner Fläche 26 an der ihm zugewandten Fläche 25 des Ringkolbens 5 radial innerhalb der Ausnehmung 12 an. Auf diese Weise wird erreicht, dass sich die Ringteile 17 und 18 bei einem Druckaufbau in der Druckkammer 4 jeweils axial an dem Ringkolben 5 abstützen.

Wenn in der Druckkammer 4 ein Druck aufgebaut wird, stützen sich bei einer Druckbeaufschlagung des Dichtungsringes 6 das äußere Ringteil 17 an der zylindrischen Innenfläche 27 des Gehäuses 2 und das innere Ringteil 18 an der zylindrischen Außenfläche 28 des inneren Führungsrohres 3 ab. Der Dichtungsring 6 wird dabei durch das äußere Ringteil 17 und das innere Ringteil 18 gestützt. Die Dichtungsflächen 29, 30 zwischen der Dichtlippe 7 und der Innenfläche 27 des Gehäuses 2 bzw. zwischen der Dichtlippe 8 und der Außenfläche 28 des Führungsrohres 3, bewirken eine Abdichtung der Druckkammer 4.

### Bezugszeichenliste

- 1: Nehmerzylinder
- 2: Gehäuse
- 3: Führungsrohr
- 4: Druckkammer
- 5: Ringkolben
- 6: Dichtungsring
- 7: Dichtlippe
- 8: Dichtlippe
- 9: Vorsprung
- 10: Dichtungsfuß
- 11: Dichtungsbereich
- 12: Ausnehmung
- 13: äußere Ringnut
- 14: innere Ringnut
- 15: Hinterschneidung
- 16: Hinterschneidung
- 17: äußeres Ringteil
- 18: inneres Ringteil
- 19: Rotationsachse
- 20: Bereich
- 21: Bereich
- 22: bogenförmiger Bereich
- 23: bogenförmiger Bereich
- 24: Fläche
- 25: Fläche
- 26: Fläche I
- 27: Innenfläche
- 28: Außenfläche
- 29: Dichtungsfläche
- 30: Dichtungsfläche
- 31: Ausrückanordnung

## Patentansprüche

1. Nehmerzylinder für eine hydraulische Ausrückanordnung (31) zur Betätigung einer Kupplung, mit einem zylindrischen Gehäuse (1) und einem konzentrisch dazu angeordneten und radial beabstandeten, zylindrischen Führungsrohr (3), die zwischen sich eine ringförmige Druckkammer (4) bilden, in der ein Ringkolben (5) axial verschiebbar angeordnet ist, wobei der Ringkolben (5) an seiner der Druckkammer (4) zugewandten Seite einen Dichtungsring (6) aufweist, wobei der Dichtungsring (6) einen Dichtungsbereich (11) und ein Y-förmiges Profil aufweist, das einen Dichtungsfuß (10), den axial daran anschließenden Dichtungsbereich (11) und an diesen anschließend, eine äußere Dichtlippe (7) und eine innere Dichtlippe (8) umfasst, die V-förmig auseinanderlaufen, wobei die äußere Dichtlippe (7) an der zylindrischen Innenfläche (27) des Gehäuses (1) und die innere Dichtlippe (8) an der zylindrischen Außenfläche (28) des Führungsrohres (3) anliegen, und ein äußeres Ringteil (17) zwischen der Außenseite des Dichtungsbereiches (11) und der zylindrischen Innenfläche (27) des Gehäuses (1) und ein inneres Ringteil (18) zwischen der Innenseite des Dichtungsbereiches (11) und der zylindrischen Außenfläche (28) des Führungsrohres (3) derart vorgesehen sind, dass sich der Dichtungsbereich (11) bei einer Druckbeaufschlagung des Dichtungsringes (6) über das äußere Ringteil (17) an der Innenfläche (27) des Gehäuses (1) und über das innere Ringteil (18) an der Außenfläche (28) des Führungsrohres (3) abstützen, **dadurch gekennzeichnet, dass** der Dichtungsfuß (10) formschlüssig und dicht in einer komplementär zu ihm ausgebildeten Ausnehmung (12) des Ringkolbens (5) gehalten ist.

2. Nehmerzylinder nach Anspruch 1, **dadurch gekennzeichnet, dass** sich der Dichtungsbereich (11) ausgehend von dem Dichtungsfuß (10) jeweils bogenförmig nach außen zu der äußeren Dichtlippe (7) bzw. nach innen zu der inneren Dichtlippe (8) erweitert.

3. Nehmerzylinder nach Anspruch 1 oder 2, **dadurch gekennzeichnet, dass** der Dichtungsbereich (11) ausgehend von dem Dichtungsfuß (10) zunächst jeweils axial verläuft und sich anschließend bogenförmig nach außen zu der äußeren Dichtlippe (7) bzw. nach innen zu der inneren Dichtlippe (8) erweitert.

4. Nehmerzylinder nach einem der Ansprüche 1 bis 3, **dadurch gekennzeichnet, dass** sich das äußere Ringteil (17) innenseitig, ausgehend von der Seite des Ringkolbens bogenförmig nach außen erweitert und dass sich das innere Ringteil (18) außenseitig, bogenförmig nach innen erweitert, sodass der Dichtungsring (6) mit seinem Dichtungsbereich (11) formschlüssig zwischen dem äußeren Ringteil (17) und dem inneren Ringteil (18) gehalten ist.

5. Nehmerzylinder nach einem der Ansprüche 1 bis 4, **dadurch gekennzeichnet, dass** die Ausnehmung (12) Hinterschneidungen (15, 16) aufweist.

6. Nehmerzylinder nach einem der Ansprüche 1 bis 5, **dadurch gekennzeichnet, dass** sich das äußere Ringteil (17) und das innere Ringteil (18) jeweils axial an dem Ringkolben (5) abstützen.

7. Nehmerzylinder nach einem der Ansprüche 1 bis 6, **dadurch gekennzeichnet, dass** die dem Ringkolben (5) zugewandte Seite des äußeren Ringteiles (17) radial außerhalb der Ausnehmung (12) an dem Ringkolben (5) und die dem Ringkolben (5) zugewandte Seite des inneren Ringteiles (18) radial innerhalb der Ausnehmung (12) an dem Ringkolben (6) anliegen.

8. Nehmerzylinder nach einem der Ansprüche 1 bis 7, **dadurch gekennzeichnet, dass** die Ringteile (17, 18) aus einem nicht verstärkten Kunststoffmaterial bestehen.

## Claims

1. Slave cylinder for a hydraulic release arrangement (31) for actuating a clutch, having a cylindrical housing (1) and a cylindrical guide tube (3) which is arranged concentrically and spaced apart radially with respect to the former, which housing (1) and guide tube (3) form an annular pressure chamber (4) between them, in which an annular piston (5) is arranged axially displaceably, the annular piston (5) having a sealing ring (6) on its side which faces the pressure chamber (4), the sealing ring (6) having a sealing region (11) and a Y-shaped profile which comprises a seal base (10), a sealing region (11) which adjoins it axially, and, adjoining the latter, an outer sealing lip (7) and an inner sealing lip (8) which run apart from one another in a V-shape, the outer sealing lip (7) bearing against the cylindrical inner face (27) of the housing (1) and the inner sealing lip (8) bearing against the cylindrical outer face (28) of the guide tube (3), and an outer annular part (17) being provided between the outer side of the sealing region (11) and the cylindrical inner face (27) of the housing (1) and an inner annular part (18) being provided between the inner side of the sealing region (11) and the cylindrical outer face (28) of the guide tube (3) in such a way that, in the case of pressure loading of the sealing ring (6), the sealing region (11) is supported via the outer annular part (17) on the inner face (27) of the housing (1) and via the inner annular part (18) on the outer face (28) of the guide tube (3), **characterized in that** the seal base (10) is held in a positively locking and sealed manner in a recess (12) of the annular piston (5), which recess (12) is of complementary configuration with respect to the said seal base (10).

2. Slave cylinder according to Claim 1, **characterized in that**, starting from the seal base (10), the sealing region (11) widens in each case arcuately to the outside to the outer sealing lip (7) and to the inside to the inner sealing lip (8).

3. Slave cylinder according to Claim 1 or 2, **characterized in that**, starting from the seal base (10), the sealing region (11) first of all in each case runs axially and subsequently widens arcuately to the outside to the outer sealing lip (7) and to the inside to the inner sealing lip (8).

4. Slave cylinder according to one of Claims 1 to 3, **characterized in that**, starting from the side of the annular piston, the outer annular part (17) widens arcuately to the outside on the inner side, and **in that** the inner annular part (18) widens arcuately to the inside on the outer side, with the result that the sealing ring (6) is held in a positively locking manner by way of its sealing region (11) between the outer annular part (17) and the inner annular part (18).

5. Slave cylinder according to one of Claims 1 to 4, **characterized in that** the recess (12) has undercuts (15, 16).

6. Slave cylinder according to one of Claims 1 to 5, **characterized in that** the outer annular part (17) and the inner annular part (18) are supported in each case axially on the annular piston (5).

7. Slave cylinder according to one of Claims 1 to 6, **characterized in that** that side of the outer annular part (17) which faces the annular piston (5) bears radially outside the recess (12) against the annular piston (5), and that side of the inner annular part (18) which faces the annular piston (5) bears radially within the recess (12) against the annular piston (6).

8. Slave cylinder according to one of Claims 1 to 7, **characterized in that** the annular parts (17, 18) consist of a non-reinforced plastic material.

## Revendications

1. Cylindre récepteur pour un système de débrayage hydraulique (31) pour l'actionnement d'un embrayage, comprenant un boîtier cylindrique (1) et un tube de guidage cylindrique (3) espacé radialement et disposé concentriquement par rapport au boîtier, lesquels forment entre eux une chambre de pression annulaire (4) dans laquelle un piston annulaire (5) est disposé de manière déplaçable axialement, le piston annulaire (5) présentant une bague d'étanchéité (6) au niveau de son côté tourné vers la chambre de pression (4), la bague d'étanchéité (6) présentant une région d'étanchéité (11) et un profil en forme de Y, qui comprend un pied de joint (10), la région d'étanchéité (11) s'y raccordant axialement et, se raccordant à celle-ci, une lèvre d'étanchéité extérieure (7) et une lèvre d'étanchéité intérieure (8) qui s'étendent en forme de V à l'écart l'une de l'autre, la lèvre d'étanchéité extérieure (7) s'appliquant contre la surface intérieure cylindrique (27) du boîtier (1) et la lèvre d'étanchéité intérieure (8) s'appliquant contre la surface extérieure cylindrique (28) du tube de guidage (3), et une partie annulaire extérieure (17) étant prévue entre le côté extérieur de la région d'étanchéité (11) et la surface intérieure cylindrique (27) du boîtier (1) et une partie annulaire intérieure (18) étant prévue entre le côté intérieur de la région d'étanchéité (11) et la surface extérieure cylindrique (28) du tube de guidage (3), de telle sorte que la région d'étanchéité (11), lors d'une sollicitation en pression de la bague d'étanchéité (6), s'appuie par le biais de la partie annulaire extérieure (17) contre la surface intérieure (27) du boîtier (1) et par le biais de la partie annulaire intérieure (18) contre la surface extérieure (28) du tube de guidage (3), **caractérisé en ce que** le pied de joint (10) est retenu par engagement par correspondance de formes et hermétiquement dans un évidement (12) du piston annulaire (5) réalisé de manière complémentaire par rapport à celui-ci.

2. Cylindre récepteur selon la revendication 1, **caractérisé en ce que** la région d'étanchéité (11) s'élargit à chaque fois en forme d'arc à partir du pied de joint (10) vers l'extérieur vers la lèvre d'étanchéité extérieure (7) ou vers l'intérieur vers la lèvre d'étanchéité intérieure (8).

3. Cylindre récepteur selon la revendication 1 ou 2, **caractérisé en ce que** la région d'étanchéité (11) s'étend d'abord à chaque fois axialement à partir du pied de joint (10) et s'élargit ensuite sous forme d'arc vers l'extérieur vers la lèvre d'étanchéité extérieure (7), respectivement vers l'intérieur vers la lèvre d'étanchéité intérieure (8).

4. Cylindre récepteur selon l'une quelconque des revendications 1 à 3, **caractérisé en ce que** la partie annulaire extérieure (17) s'élargit du côté intérieur, en forme d'arc vers l'extérieur à partir du côté du piston annulaire et **en ce que** la partie annulaire intérieure (18) s'élargit du côté extérieur, en forme d'arc vers l'intérieur, de telle sorte que la bague d'étanchéité (6) soit retenue avec sa région d'étanchéité (11) par engagement par correspondance de formes entre la partie annulaire extérieure (17) et la partie annulaire intérieure (18).

5. Cylindre récepteur selon l'une quelconque des revendications 1 à 4, **caractérisé en ce que** l'évidement (12) présente des contre-dépouilles (15, 16).

6. Cylindre récepteur selon l'une quelconque des revendications 1 à 5, **caractérisé en ce que** la partie annulaire extérieure (17) et la partie annulaire intérieure (18) s'appuient à chaque fois axialement contre le piston annulaire (5).

7. Cylindre récepteur selon l'une quelconque des revendications 1 à 6, **caractérisé en ce que** le côté de la partie annulaire extérieure (17) tourné vers le piston annulaire (5) s'applique radialement à l'extérieur de l'évidement (12) contre le piston annulaire (5) et le côté de la partie annulaire intérieure (18) tourné vers le piston annulaire (5) s'appuie radialement à l'intérieur de l'évidement (12) contre le piston annulaire (6).

8. Cylindre récepteur selon l'une quelconque des revendications 1 à 7, **caractérisé en ce que** les parties annulaires (17, 18) se composent d'un matériau en plastique non renforcé.
